# EUROPEAN PATENT SPECIFICATION

(11) **EP 2 517 390 B1**
(45) Date of publication and mention of the grant of the patent: **09.03.2016**
(21) Application number: 09799350.5
(22) Date of filing: 22.12.2009
(51) Int. Cl.: H04J 14/02, H04B 10/00, H04J 3/16, H04Q 11/00

(54) **METHOD AND DEVICE FOR DATA PROTECTION IN AN OPTICAL COMMUNICATION NETWORK**
VERFAHREN UND VORRICHTUNG FÜR DATENSCHUTZ IN EINEM OPTISCHEN KOMMUNIKATIONSNETZ
PROCÉDÉ ET DISPOSITIF DESTINÉS À LA PROTECTION DES DONNÉES DANS UN RÉSEAU DE COMMUNICATION OPTIQUE

(43) Date of publication of application: 31.10.2012
(73) Proprietor: Xieon Networks S.à r.l., 2633 Senningerberg (LU)
(72) Inventor: CHARZINSKI, Joachim, 70567 Stuttgart (DE); STADEMANN, Rainer, 82335 Berg (DE)
(74) Representative: Lucke, Andreas
(86) International application number: PCT/EP2009/067722
(87) International publication number: WO 2011/076256

(56) References cited:
- EP-A1- 1 746 857
- EP-A1- 2 117 138
- EP-A2- 0 877 502
- EP-A2- 1 450 509
- US-A1- 2002 071 149
- US-A1- 2006 083 513
- US-B1- 7 212 738

## Description

The invention relates to a method for data transmission in an optical communication network. In addition, a communication system arranged for executing this method is suggested.

This invention in particular relates to the field of wavelength division multiplexing (WDM) networks, in particular next-generation optical access (NGOA) ultra-dense WDM (UDWDM) access networks.

Telecommunication access networks have to be protected against link and node failures. Especially if there is a large number (e.g., more than 100.000) of subscribers served by a single office, precautions need to be taken against a complete failure of such office.

This issue becomes even more apparent considering the convergence of services, i.e. voice, broadband data and television (TV) services being served via the same network connection. Hence, an outage of the access service may simultaneously affect a huge number of user services without any chance for the subscribers to further communicate or to obtain any information via alternative services.

Therefore, measures for geographical redundancy are required directly at the access system if the access system such as an ultra-dense WDM NGOA PON is used for office consolidation, serving hundreds of thousands of subscribers from one physical site. A known approach is to deploy a second fiber back-haul to a backup site for each PON, which introduces a duplication of required OLT equipment at correspondingly high costs.

Existing protection mechanisms against optical link failure require duplication of interfaces and/or optimally switching signals to alternative paths.

Protection mechanisms against node or site failure require the full service of a node or site to be taken over by an alternative node or site, requiring corresponding physical connectivity to all those nodes or sites.

In POTS (plain old telephony system) networks, the number of subscribers per local office (short distance office, SDO) is sufficiently small (usually less than 50.000) to allow the network to be operated without a geographical redundancy concept for failures of local offices. As the number of subscribers aggregated per long distance offices (LDOs) is significantly larger, protection against failures of complete LDOs is usually provided by geographically redundant uplinks from SDOs to at least two different LDOs.

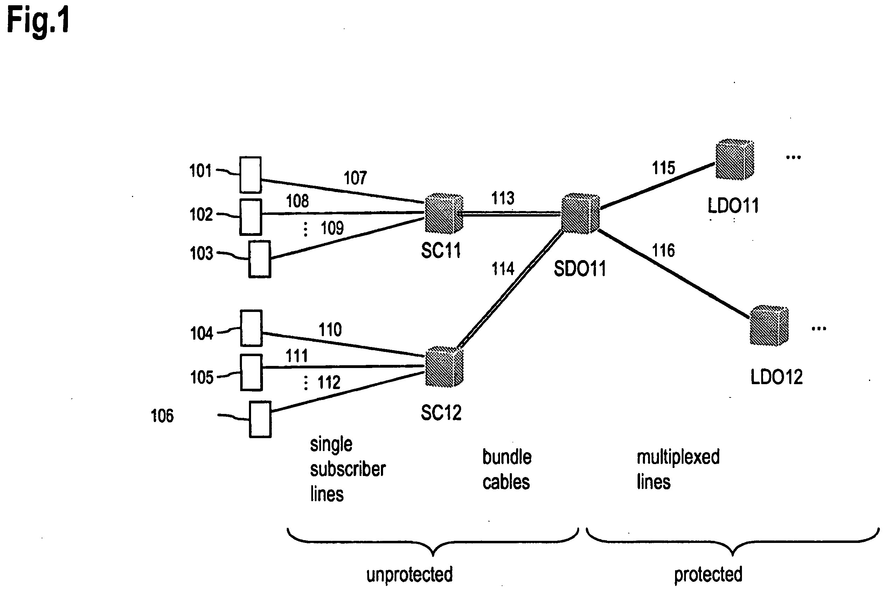

**Fig.1** shows a schematic diagram depicting a protection scheme in a POTS network. Subscribers 101 to 103 are connected to a street cabinet SC11 via subscriber lines 107 to 109 and subscribers 104 to 106 are connected to a street cabinet SC12 via subscriber lines 110 to 112. The street cabinets SC11 and SC12 are connected via lines 113, 114 to a short distance office SDO11, which is further connected via lines 115, 116 to a long distance office LDO11 and to a long distance office LDO12.

As indicated in Fig.1, neither subscriber lines 107 to 112 nor cable bundles 113, 114 are protected. However, each local exchange (e.g., SDO11) is connected to at least two long distance offices LDO11, LDO12 by redundant uplink lines (trunks) 115, 116. Hence, the scale of an outage in case of a complete site failure is limited to the number of subscribers connected to one SDO.

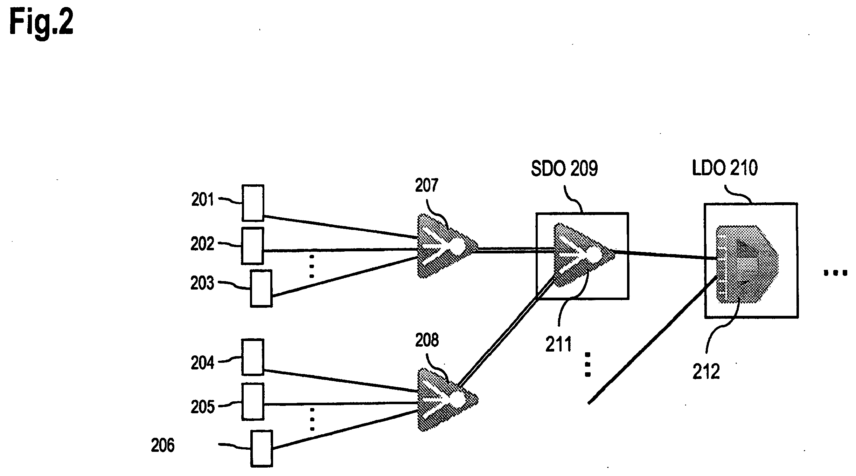

**Fig.2** shows a schematic diagram visualizing a site consolidation approach via a long reach WDM PON. Subscribers 201 to 203 are connected to a passive optical splitter 207 and subscribers 204 to 206 are connected to a passive optical splitter 208. The splitters 207 and 208 are connected to a passive splitter 211 that is deployed in an SDO 209. The splitter 209 is further connected to an OLT 212, which is deployed in an LDO 210.

If NGOA PON systems are used for site consolidation purposes, the function of short distance offices is reduced to housing a passive fiber splitter and all optoelectronic processing is done in the previous long-distance offices, as indicated in Fig.2, concepts are required to protect subscribers against the outage of an LDO site.

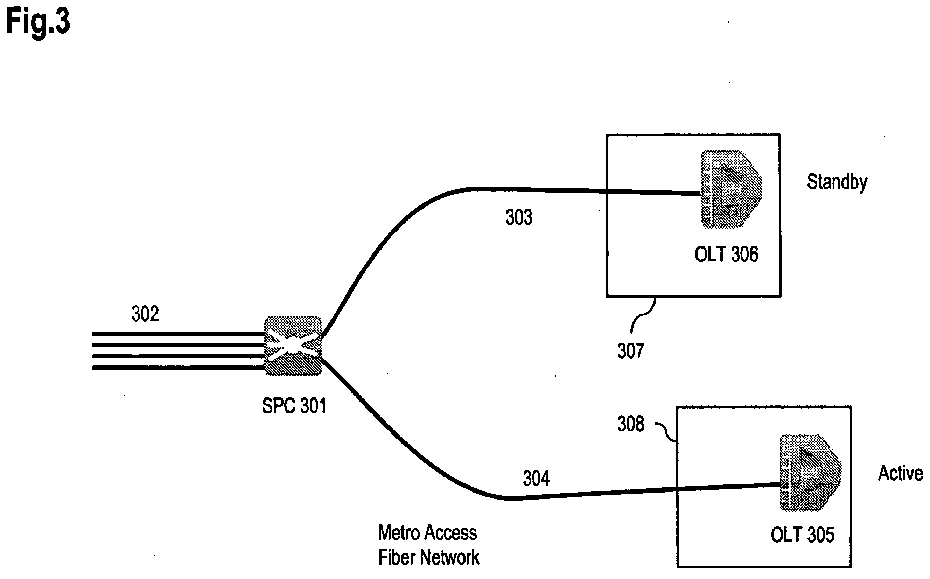

**Fig.3** shows a schematic diagram comprising a geographically redundant 1:1 protection scheme of an OLT (site) by employing a passive optical splitter/combiner element SPC 301 that connects the access fiber 302 via separate fibers 303 and 304 both to an active OLT 305 and to a standby OLT 306, each OLT being deployed at different LDO locations 307, 308. This concept requires each OLT to be duplicated, hence substantially doubling the costs for an NGOA PON system on the OLT side.

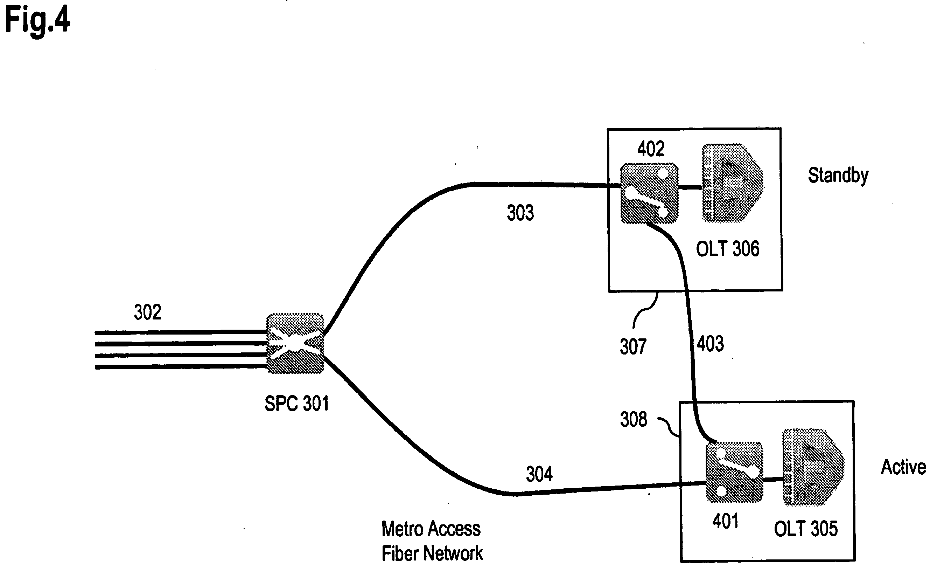

**Fig.4** shows a schematic diagram comprising an alternative approach using optical switches and a standby OLT in a 1:1 geographically redundancy architecture for WDM PONs based on the scenario shown in Fig.3. Fig.4 comprises an additional link 403 between the active OLT 305 and the standby OLT 306 and two fiber switches 401 and 402, allowing the active OLT 305 to stay in service even if the link 305 is broken.

The advantage of the scenario shown in Fig.4 over that of Fig.3 is that the active OLT 305 may continue serving its previous subscribers and there is no re-training or reconfiguration of ONUs required after a link failure.

On the other hand, if the complete node of the active OLT 305 or its site fails, service can be taken over by the standby OLT 306.

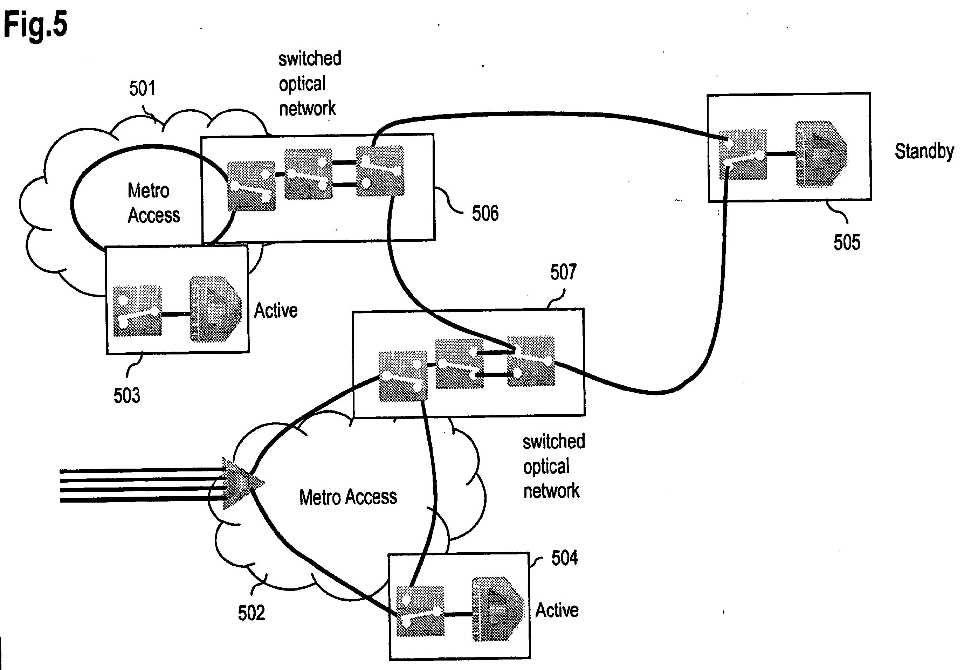

Using the same concept as in Fig. 4, the amount of standby OLT resources required can be reduced from 100% to 100%/N by sharing each standby OLT between N active OLTs. In order to provide geographical redundancy, different active OLTs to be protected have to be located on different places throughout the network. **Fig.5** shows a diagram visualizing such a 1:N geographical redundancy concept for NGOA WDM PON using switched optical fiber networks and a shared OLT.

A metro access 501 is connected to a switched active OLT 503 and to a switched optical network 506. Another metro access 502 is connected to a switched active OLT 504 and to a switched optical network 507. Each of the switched optical networks 506, 507 is connected to a switched standby OLT 505 for protection purposes.

While the solution shown in Fig.5 can save standby OLT resources, it introduces significant complexity and cost for providing the switched optical network: The switches and fibers all have to carry the full optical WDM spectrum that is used in the PON system and consequently dedicated fibers are required for each of the links. In addition, it has to be noted that usually there will be multiple PONs served by each LDO site, so a number of fibers has to be switched in parallel by each of the fiber switches, which further increases the complexity and thus cost of such an architecture.

Document EP1450509 A2 discloses protection switching architecture used in a telecommunications system such as a wavelength division multiplexed (WDM) telecommunications system to replace a failed transmission line or a failed wavelength processing device. A spare wavelength processing device transmitter replaces a failed service wavelength processing device transmitter. A spare transmission line replaces a failed service transmission line. A spare wavelength processing device receiver monitors the optical signals, one wavelength at a time, on either the spare transmission line or the service transmission line and replaces one of the service wavelength processing device receivers. Wavelength selection equipment routes either the service transmission line or the service transmission line to the service wavelength processing device receivers and selects wavelengths to be monitored by the spare wavelength processing device receiver.

Document EP0877502 A2 discloses a transmitting apparatus comprising a plurality of optical signal transmitters and plurality of transmitting transponders for converting the wavelengths of optical signals transmitted into allocated transmitting wavelengths. Also means for selecting one of the transmission signals and an auxiliary transmitting transponder for converting a wavelength of an optical signal transmitted from the optical signal transmitters into a wavelength different from the wavelength-converted optical signals, and transmitting an auxiliary wavelength converted optical signal.

The patent application EP 2117138 A1 describes a point to point transmission system with a sending end module and a receiving end module. A number of N wavelength division multiplexed channels is provided for regular traffic and a number of M wavelength division multiplexed channels is provided for backup traffic.

If this embodiment is transformed into a point to multipoint structure the expenditure would be inadmissible.

The patent application US 2002/0071149 A1 describes a PON system with redundancy. Data signals are transmitted as time division multiplexed signals in downstream and upstream direction between an OLT (Optical Line Terminal) and a plurality of ONUs (Optical Network Unit). A protection interface module is installed at the OLT. If the fibers are cut or the complete OLT is out of order then also a protection connection is interrupted.

The **problem** to be solved is to overcome the disadvantages stated above and in particular to provide an efficient redundancy mechanism that is in particular applicable in WDM PONs.

This problem is solved according to the features of the independent claims. Further embodiments result from the depending claims.

In order to overcome this problem, a method according to claim 1 is provided.

The backup service provides an efficient solution in case of a failure of the main service. The main service may be provided by a PON, in particular by at least one OLT of this PON.

Hence, a geographical redundancy approach is suggested in particular for protection against node failures, significantly reducing the cost for additional network components and being capable of coping without fiber switches.

The backup service is activated in case the main service is impaired. The optical network unit may recognize the impairment (e.g., by detecting a loss of signal) and hence may tune its receiver to the wavelength(s) and enter, e.g., a TDM operation mode.

Such impairment of the main service may be any situation that requires switching to the backup service, e.g., a distortion, an outage or failure of the service or the site, a signal degradation, a disconnection or the like.In another embodiment, subscribers affected by the impairment are supplied by the backup service, wherein the backup service in particular comprises service limitations.

Such service limitations may comprise restrictions or reduced capacities regarding, e.g., the bandwidth for data access that is supplied to each subscriber affected by the impairment of the main service. Furthermore, less important services may not be provided (to some or to all subscribers) in case of an impairment. It is also an option that basic telephony services and/or basic data access services (with a minimum bandwidth) are provided to all subscribers or a group thereof. It is further noted that the limitations could be dynamically adjusted based on the actual resources that are available for backup services and/or based on a quality of service level the particular subscriber has requested or signed up for.

It is thus a particular option to provide backup services for a selection of subscribers only. This can be achieved, e.g., by allowing only selected ONUs to tune in to the wavelength(s) provided by the backup service.

In a next embodiment, the main service is re-activated after the impairment and the backup service enters a standby mode.

The subscribers, in particular the ONUs associated with the subscribers, can be instructed via a management channel to switch back to the main service.

It is also an option that the ONUs probe the management channel of the main service to determine whether the main service is active again. In this case, the ONUs may switch to the main service (again).

It is also an embodiment that the the backup service is reserved/used for substituting several main services that are in particular provided by several optical line terminals.

As the component providing the backup service is deployed on a different site as are the components providing the main services, it can provide backup services for several main services of various optical networks or OLTs. In this case, the OLT providing the backup services is connected to the subscribers of all such main services. Such connection can be achieved by deploying a splitter and/or combiner to connect the subscribers, e.g., ONUs to the OLTs providing the main service and to the OLT providing the backup services.

The backup services may utilize different resources (e.g., at least one different wavelength) for the different main services.

According to an embodiment, the optical communication network comprises at least one passive optical network.

There may be several passive optical networks, each being served by an OLT.

According to another embodiment, wavelength division multiplexing is used.

In yet another embodiment, the at least one standby OLT reserved for the backup service utilizes a time division multiplexing scheme on at least one wavelength.

It is noted that various multiplexing schemes could be utilized, e.g., TDMA, CDMA, OFDMA or SC-FDMA.

The at least one wavelength or at least one wavelength band could be used per direction (uplink and downlink). It is noted that uplink refers to the direction from the subscriber towards the network and downlink refers to the opposite direction.

According to a next embodiment, the at least one wavelength or the at least one wavelength band is within a spectrum of the wavelengths used for the main service or at a separate spectrum.

Said spectrum may be a (UD)WDM PON spectrum or a predefined wavelength band.

It is noted that in case the main service and the backup service use the same spectrum, wavelength filters can be provided to reduce interference and/or crosstalk.

Pursuant to yet an embodiment, several backup wavelengths may be provided for several backup services.

It may be of advantage to provide a particular backup service per resource, e.g., at least one wavelength for telephony services, another at least one wavelength for TV and/or a further at least one wavelength for data access services.

The problem stated above is also solved by an optical wavelength division multiplex communication system according to claim 12.

It is further noted that said system can comprise at least one, in particular several means that are arranged to execute the steps of the method described herein. The means may be logically or physically separated; in particular several logically separate means could be combined in at least one physical unit.

The OLT and ONU may comprise at least one of the following: a processor, a microcontroller, a hard-wired circuit, an ASIC, an FPGA, a logic device.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

Embodiments of the invention are shown and illustrated in the following figures:
- Fig.6: shows a diagram visualizing a shared OLT that provides geographical redundancy with a limited backup service on a dedicated wavelength for subscribers that are served by primary OLTs;
- Fig.7: shows a diagram visualizing the shared OLT according to Fig.6, wherein an additional SPC is used to combine the fibers between the shared OLT and the splitters connecting the ONUs;
- Fig.8: shows two spectrum diagrams each comprising a UDWDM PON spectrum, wherein one diagram visualizes a spectrum layout with a backup channel that is part of the UDWDM spectrum and the other diagram depicts a spectrum layout with a backup channel that is in a separate wavelength range (e.g., another band).

The approach suggested in particular provides a restricted service backup instead of a full service backup. A standby OLT may use a single reserved wavelength per direction that is not used in the active WDM PON system. Instead of dedicating that wavelength fully to one ONU service, it can be shared, e.g., in a TDM mode (similar to a GPON, EPON, GEPON system) or in optical OFDMA mode between multiple ONUs. Hence, the solution may provide a restricted service of, e.g., a data rate amounting to 256Kbit/s per subscriber instead of the full data rate of, e.g., 1Gbit/s per subscriber. Hence, in the backup scenario, e.g., in case of a severe network failure, the subscriber is still supplied with telephony and basic data access services.

It is noted that in case the conventional (primary) scenario cannot be maintained, the restricted backup scenario is activated. Scenario in this case may refer to at least one access service. These scenarios may be associated each with at least one optical network, in particular at least one PON, or with at least one OLT. The OLT hence is a centralized optical component in an optical network conveying services towards subscribers, which can be attached to the optical network via ONUs. After the outage is corrected, the conventional scenario can be re-activated and the backup scenario can be switched to standby.

The backup service does not have to be as optimized as the primary access service. However, as the ONUs are capable of coherent detection, the backup service can be optimized in two ways:
(a) A much higher split ratio can be allowed than in standard GPON (i.e. in the conventional scenario) thereby improving the optical budget due to coherent detection.
(b) A less efficient and thus less sophisticated upstream transmission (larger inter-frame gaps, less precise ranging requirements) can be provided compared to the standard GPON (i.e. the conventional scenario).

The ONUs that do not require backup service, because their primary active OLT is reachable, do not tune onto the backup service wavelength(s) so that multiple PONs can be protected by a single standby OLT without any need to interrupt the parallel fiber connections.

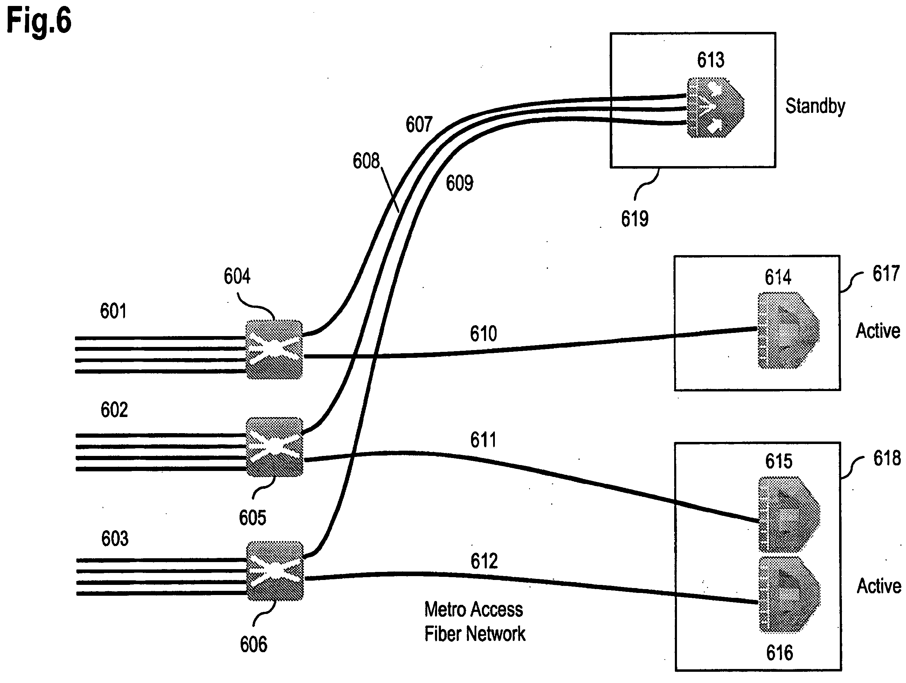

**Fig. 6** shows a diagram visualizing a shared OLT 613 that provides geographical redundancy with a limited backup service on a dedicated wavelength for subscribers that are served by OLTs 614 to 616.

The OLT 614 is deployed at a site 617 and connected via a fiber 610 to an SPC 604 to which several lines 601 are connected towards subscribers (not shown).

The OLTs 615 and 616 are deployed at a site 618, wherein the OLT 615 is connected via a fiber 611 to an SPC 605 to which several lines 602 are connected towards subscribers (not shown). Further, the OLT 616 is connected via a fiber 612 to an SPC 606 to which several lines 603 are connected towards subscribers (not shown).

The OLTs 614 to 616 are active OLTs, wherein said OLT 613 is a standby OLT deployed at a different location or site 619. The OLT 613 is connected via a fiber 607 to the SPC 604, via a fiber 608 to the SPC 605 and via a fiber 609 to the SPC 606.

The fibers 607 to 612 can be part of a metro access fiber network.

In case of a failure at any of the OLTs 614 to 616 or at any of the sites 617 or 618, the OLT 613 is able to provide at least a portion of the services to the subscribers affected by this failure. This can in particular be achieved via at least one (dedicated) wavelength or range of wavelengths that is/are reserved for backup services.

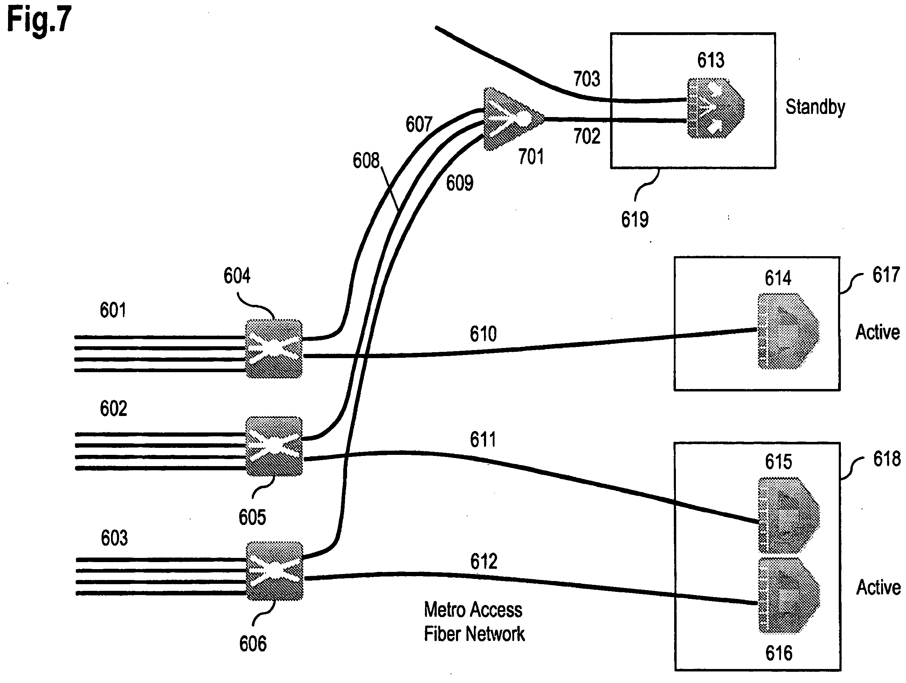

**Fig.7** shows a diagram visualizing the shared OLT 613 according to Fig.6, wherein an additional SPC 701 is used to combine the fibers 607 to 609 and to convey traffic via a single fiber 702 to the OLT 613. Another fiber 703 indicates that the standby OLT 613 may be connected in a similar manner to further SPCs (not shown).

It is an advantage of the solution suggested that a significant amount of resources (fiber switches and/or OLTs) can be saved, whereas the geographical redundancy required for longreach PON systems with site consolidation can still be provided. This alleviates the issue that the subscribers do not face a complete loss of all services in case of failure of their associated OLT as the backup OLT provides a reduced set of services that allow for, e.g., telephone communication as well as basic data services (with reduced bandwidth compared to the normal scenario with the conventional OLTs being up and running).

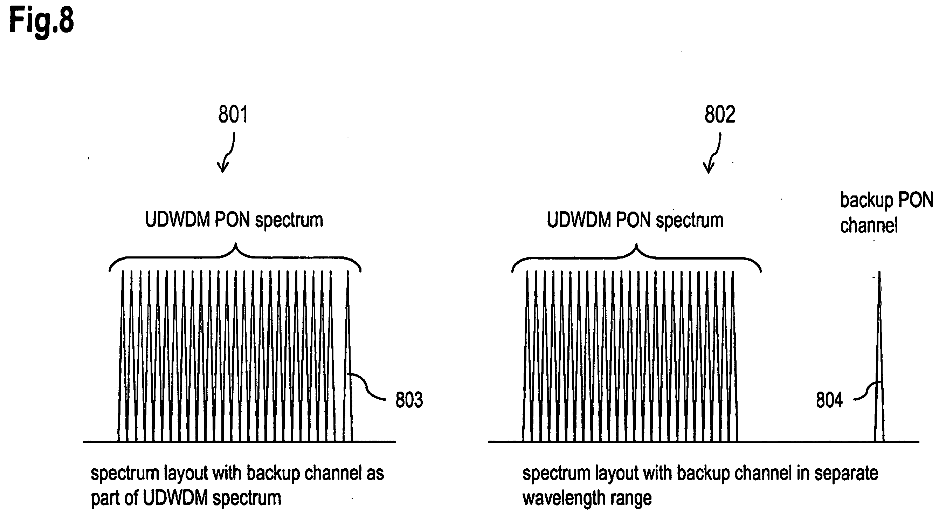

**Fig.8** shows two spectrum diagrams 801, 802 each comprising a UDWDM PON spectrum, wherein the diagram 801 visualizes a spectrum layout with a backup channel 803 that is part of the UDWDM spectrum. In contrast, the diagram 802 visualizes a spectrum layout with a backup channel 804 that is in a separate wavelength range (e.g., another band).

The following shows an exemplary sequence of actions processed at an ONU in case a connection to the conventional or primary PON or OLT is lost (such loss may in particular be detected by the ONU):
- A long-time loss or a (semi-)permanent loss of signal on a normal (management) wavelength is detected by the ONU.
- The ONU releases subscriber state information, e.g., subscriber IP addresses.
- The ONU's receiver is tuned to a (e.g., preconfigured) wavelength for a backup system.
- A TDM PON code is activated on a processor or a TDM chip.
- A synchronization is conducted (e.g., signal, MAC, etc.).
- A communication with the backup TDM PON (backup OLT) is established.

In case the primary PON is again available, the ONU may return to normal operation.

As an option, the backup OLT may operate on a same wavelength band as does the conventional OLT. In this case, at least one unused wavelength can be utilized for backup purposes.

It is also possible that the backup OLT and the conventional OLT both operate on different wavelength bands.

In case the backup OLT and the conventional OLT operate on separate wavelength windows (bands), the fibers 607 to 609 (see Fig.6 and Fig.7) can be equipped with wavelength filters to reduce crosstalk between the at least one backup wavelength and the wavelengths of the conventional OLTs.

It is a further option that multiple backup systems (e.g., one backup system per service such as TV, telephony or data) can be provided via several wavelengths.

In addition, different multiplexing and modulation schemes can be used for the backup PON, e.g. TDMA, CDMA, OFDMA, SC-FDMA.

Instead of offering the backup service to all subscribers, only selected subscribers can be served by the backup service. This can be realized by only allowing selected ONUs to tune in to the backup service wavelength(s).

Optical switches can be employed between the splitter and/or combiners and the backup OLT to allow the OLT to select a set of PONs to connect to. An advantage compared to the solutions shown in Fig.4 or Fig.5 is that only a single wavelength needs to be switched.

Multiple PONs may be protected in parallel by using separate wavelengths in the backup OLT.

A backup TDM PON system can have less stringent requirements regarding an upstream timing (e.g., longer inter-burst gaps, longer synchronization preambles and less strict ranging accuracy) compared to the conventional (active) (G)PON.

The approach could be combined with optical backup paths between SPCs and active OLTs, which would avoid using the backup PON in case of a mere link failure.

The backup OLT can inform the ONUs via its management channel to switch back to the conventional OLT (primary PON).

The ONUs can regularly probe the primary system's management channel to check if the primary system is up again. This can be done by shortly tuning a receiver to another wavelength (the primary system's management channel wavelength) or by using a separate receiver in the ONU, which might exist anyway for parallel reception of video broadcast transmissions. The wavelength(s) used by the backup PON system can be preconfigured or configured towards the ONUs via management in the primary PON system.

The ONUs can be equipped with an (optical) indicator that signals the emergency operation to the subscriber.

### List of Abbreviations:

- CDMA: Code Division Multiple Access
- DWDM: Dense Wavelength Division Multiplexing
- EPON: Ethernet PON
- FDMA: Frequency Division Multiple Access
- GEPON: Ethernet PON
- GPON: Gigabit PON
- LDO: Long Distance Office
- OFDMA: Orthogonal Frequency Division Multiple Access
- OFS: Optical Fiber Switch
- OLT: Optical Line Terminal
- ONU: Optical Network Unit (also referred to as "ONT", Optical Network Termination)
- OXC: Optical Crossconnect
- PON: Passive Optical Network
- POTS: Plain Old Telephony System
- ROADM: Reconfigurable Optical Add-Drop Multiplexer
- SC-FDMA: Subcarrier Frequency Division Multiple Access
- SDO: Short Distance Office
- SPC: Splitter and/or Combiner
- TDM: Time Division Multiplexing
- TDMA: Time Division Multiple Access
- TV: Television
- UDWDM: Ultra-Dense Wavelength Division Multiplexing
- WDM: Wavelength Division Multiplexing

## Claims

1. A method for data transmission in an optical wavelength division multiplex communication network with active optical line terminals (614 - 616) connected via optical fibers (610 - 612) and splitters (604 - 606) to optical network units,
wherein a backup optical line terminal (613) is additionally connected via additional fibers (607 - 609) and said splitters (604 - 606) to said optical network units, wherein the backup optical line terminal (613) and said active optical line terminals (614 - 616) are deployed at different sites (617, 618, 619),
wherein a main service is provided between said active optical line terminals (614 - 616) and the optical network units;
wherein a backup service is provided between the backup optical line terminal and at least one of the optical network units via at least one of the additional fibers and at least one backup data channel having a dedicated wavelength; and wherein in case the backup service is activated, at least one optical network unit affected by an impairment tunes onto the backup wavelength of the backup channel.

2. The method according to claim 1, wherein the backup service is activated in case the main service is impaired.

3. The method according to claim 2, wherein subscribers affected by the impairment are supplied by the backup service, wherein the backup service in particular comprises service limitations.

4. The method according to any of the claims 2 to 3 wherein the main service is re-activated after the impairment and the backup service enters a standby mode.

5. The method according to any of the preceding claims, wherein the backup service is reserved/used for substituting several main services that are in particular provided by several active optical line terminals (614 - 616).

6. The method according to any of the preceding claims, wherein the optical communication network comprises at least one passive optical network.

7. The method according to any of the preceding claims, wherein the at least one backup optical line terminal (613) reserved for the backup service utilizes a time division multiplexing scheme on at least one backup wavelength.

8. The method according to claim 7, wherein the at least one backup wavelength is within a spectrum of the wavelengths used for the main service or at a separate spectrum.

9. The method according to any of the preceding claims, wherein several backup wavelengths are provided for several backup services.

10. A device comprising a processing unit that is arranged such that the method according to any of the preceding claims is executable thereon.

11. The device according to claim 10, wherein said device is an optical network component, in particular associated with an optical network unit or an optical line terminal.

12. An optical wavelength division multiplex communication system with active optical line terminals (614 - 616) connected via optical fibers (610 - 612) and splitters (604 - 606) to optical network units, wherein a backup optical line terminal (613) is additionally connected via additional fibers (607 - 609) and said splitters (604 - 606) to said optical network units, wherein the backup optical line terminal (613) and said active optical line terminals (614 - 616) are deployed at different sites (617,618,619);
wherein the system is adapted to provide a main service between said active optical line terminals (614-616) and the optical network units;
wherein the system is further adapted to provide a backup service between the backup optical line terminal and at least one of the optical network units via at least one of the additional fibers and at least one backup data channel having a dedicated wavelength; and
wherein at least one optical network unit is adapted to tune onto the backup wavelength of the backup channel, in case the backup service is activated and when said at least one optical network unit is affected by an impairment.

## Patentansprüche

1. Verfahren zur Datenübertragung in einem optischen Wellenlängenmultiplex-Kommunikationsnetzwerk mit aktiven Optical-Line-Terminals (614-616), die über optische Fasern (610-612) und Splitter (604-606) mit optischen Netzwerkeinheiten verbunden sind, wobei zusätzlich ein Sicherungs-Optical-Line-Terminal (613) über zusätzliche Fasern (607-609) und die genannten Splitter (604-606) mit den genannten optischen Netzwerkeinheiten verbunden ist, wobei das Sicherungs-Optical-Line-Terminal (613) und die genannten aktiven Optical-Line-Terminals (614-616) an unterschiedlichen Orten (617, 618, 619) aufgestellt sind,
wobei ein Hauptservice zwischen den genannten aktiven Optical-Line-Terminals (614-616) und den optischen Netzwerkeinheiten bereitgestellt wird;
wobei ein Sicherungsservice zwischen dem Sicherungs-Optical-Line-Terminal und zumindest einer der optischen Netzwerkeinheiten über zumindest eine der zusätzlichen Fasern und über zumindest einen Sicherungsdatenkanal mit einer zugehörigen Wellenlänge bereitgestellt wird; und
wobei sich im Fall einer Aktivierung des Sicherungsservice zumindest eine optische Netzwerkeinheit, die von einer Störung betroffen ist, auf die Sicherungswellenlänge des Sicherungskanals einstellt.

2. Verfahren nach Anspruch 1, bei dem der Sicherungsservice für den Fall einer Störung des Hauptservice aktiviert wird.

3. Verfahren nach Anspruch 2, bei dem von der Störung betroffene Teilnehmer mit dem Sicherungsservice versorgt werden, wobei der Sicherungsservice insbesondere Servicebeschränkungen aufweist.

4. Verfahren nach Anspruch 2 oder 3, bei dem der Hauptservice nach der Störung erneut aktiviert wird und der Sicherungsservice in einen Standby-Modus eintritt.

5. Verfahren nach einem der vorhergehenden Ansprüche, bei dem der Sicherungsservice als Ersatz für mehrere Hauptservices reserviert ist/verwendet wird, die insbesondere von mehreren aktiven Optical-Line-Terminals (614-616) bereitgestellt werden.

6. Verfahren nach einem der vorhergehenden Ansprüche, bei dem das optische Kommunikationsnetzwerk mindestens ein passives optisches Netzwerk umfasst.

7. Verfahren nach einem der vorhergehenden Ansprüche, bei dem das zumindest eine Sicherungs-Optical-Line-Terminal (613), das für den Sicherungsservice reserviert ist, auf mindestens einer Sicherungswellenlänge ein Zeitmultiplexschema einsetzt.

8. Verfahren nach Anspruch 7, bei dem sich die zumindest eine Sicherungswellenlänge innerhalb des für den Hauptservice verwendeten Wellenlängenspektrums befindet oder sich in einem getrennten Spektrum befindet.

9. Verfahren nach einem der vorhergehenden Ansprüche, bei dem mehrere Sicherungswellenlängen für mehrere Sicherungsservices bereitgestellt werden.

10. Vorrichtung, die eine Verarbeitungseinheit umfasst, die derart eingerichtet ist, dass ein Verfahren nach einem der vorhergehenden Ansprüche auf ihr ausführbar ist.

11. Vorrichtung nach Anspruch 10, die eine optische Netzwerkkomponente ist und die insbesondere mit einer optischen Netzwerkeinheit oder mit einem Optical-Line-Terminal verbunden ist.

12. Optisches Wellenlängenmultiplex-Kommunikationssystem mit aktiven Optical-Line-Terminals (614-616), die über optische Fasern (610-612) und Splitter (604-606) mit optischen Netzwerkeinheiten verbunden sind, wobei zusätzlich ein Sicherungs-Optical-Line-Terminal (613) über zusätzliche Fasern (607-609) und die genannten Splitter (604-606) mit den genannten optischen Netzwerkeinheiten verbunden ist, wobei das Sicherungs-Optical-Line-Terminal (613) und die genannten aktiven Optical-Line-Terminals (614-616) an unterschiedlichen Orten (617, 618, 619) aufgestellt sind;
wobei das System eingerichtet ist, einen Hauptservice zwischen den genannten aktiven Optical-Line-Terminals (614-616) und den optischen Netzwerkeinheiten bereitzustellen;
wobei das System weiterhin eingerichtet ist, einen Sicherungsservice zwischen dem Sicherungs-Optical-Line-Terminal und zumindest einer der optischen Netzwerkeinheiten über zumindest eine der zusätzlichen Fasern und über zumindest einen Sicherungsdatenkanal mit einer zugehörigen Wellenlänge bereitzustellen; und
wobei zumindest eine optische Netzwerkeinheit eingerichtet ist, sich im Fall einer Aktivierung des Sicherungsservice und wenn die genannte zumindest eine optische Netzwerkeinheit von einer Störung betroffen ist auf die Sicherungswellenlänge des Sicherungskanals einzustellen.

## Revendications

1. Procédé de transmission de données dans un réseau optique de communication à multiplexage par répartition en longueurs d'ondes avec des terminaux de lignes optiques actifs (614-616) connectés par l'intermédiaire de fibres optiques (610-612) et de diviseurs (604-606) à des unités de réseau optique, où un terminal de ligne optique de sauvegarde (613) est, de plus, connecté par l'intermédiaire de fibres supplémentaires (607-609) et desdits diviseurs (604-606) auxdites unités de réseau optique, où le terminal de ligne optique de sauvegarde (613) et lesdits terminaux de ligne optique actifs (614-616) sont déployés à différents endroits (617, 618, 619),
où un service principal est fourni entre lesdits terminaux de ligne optique actifs (614-616) et les unités de réseau optique ;
où un service de sauvegarde est fourni entre le terminal de ligne optique de sauvegarde et au moins une des unités de réseau optique par l'intermédiaire d'au moins une des fibres supplémentaires et au moins un canal de données de sauvegarde ayant une longueur d'onde dédiée ; et
où, dans l'éventualité où le service de sauvegarde serait activé, au moins une unité de réseau optique affectée par une altération s'accorde sur la longueur d'onde de sauvegarde du canal de sauvegarde.

2. Procédé selon la revendication 1, dans lequel le service de sauvegarde est activé dans l'éventualité où le service principal serait altéré.

3. Procédé selon la revendication 2, dans lequel des abonnés affectés par l'altération sont approvisionnés par le service de sauvegarde, où le service de sauvegarde comprend en particulier des limitations de service.

4. Procédé selon l'une quelconque des revendications 2 à 3 dans lequel le service principal est réactivé après que l'altération et le service de sauvegarde sont entrés en mode de veille.

5. Procédé selon l'une quelconque des revendications précédentes, dans lequel le service de sauvegarde est réservé/utilisé pour remplacer plusieurs services principaux qui sont fournis en particulier par plusieurs terminaux de ligne optique actifs (614-616).

6. Procédé selon l'une quelconque des revendications précédentes, dans lequel le réseau optique de communication comprend au moins un réseau optique passif.

7. Procédé selon l'une quelconque des revendications précédentes, dans lequel l'au moins terminal de ligne optique de sauvegarde (613), réservé pour le service de sauvegarde, utilise un schéma de multiplexage par répartition dans le temps sur au moins une longueur d'onde de sauvegarde.

8. Procédé selon la revendication 7, dans lequel l'au moins une longueur d'onde de sauvegarde se situe dans un spectre de longueurs d'ondes utilisées pour le service principal ou au niveau d'un spectre séparé.

9. Procédé selon l'une quelconque des revendications précédentes, dans lequel plusieurs longueurs d'ondes de sauvegarde sont fournies pour plusieurs services de sauvegarde.

10. Dispositif comprenant une unité de traitement qui est conçue de manière à ce que le procédé selon l'une quelconque des revendications précédentes soit exécutable sur celui-ci.

11. Dispositif selon la revendication 10, dans lequel ledit dispositif est un composant de réseau optique, associé en particulier à une unité de réseau optique ou à un terminal de ligne optique.

12. Système optique de communication à multiplexage par répartition en longueurs d'ondes ayant des terminaux de ligne optique actifs (614-616) connectés par l'intermédiaire de fibres optiques (610-612) et de diviseurs (604-606) à des unités de réseau optique, où un terminal de ligne optique de sauvegarde (613) est, de plus, connecté par l'intermédiaire de fibres additionnelles (607-609) et desdits diviseurs (604-606) auxdites unités de réseau optique, où le terminal de ligne optique de sauvegarde (613) et lesdits terminaux de ligne optique actifs (614-616) sont déployés à différents endroits (617, 618, 619) ;
où le système est conçu pour fournir un service principal entre lesdits terminaux de ligne optique actifs (614-616) et les unités de réseau optique ;
où le système est en outre conçu pour fournir un service de sauvegarde entre le terminal de ligne optique de sauvegarde et au moins une des unités de réseau optique par l'intermédiaire d'au moins une des fibres additionnelles et au moins un canal de données de sauvegarde ayant une longueur d'onde dédiée ; et
où au moins une unité de réseau optique est conçue pour s'accorder sur la longueur d'onde de sauvegarde du canal de sauvegarde, au cas où le service de sauvegarde serait activé et lorsque ladite au moins une unité de réseau optique est affectée par une altération.
